(19) Europäisches Patentamt
European Patent Office
Office européen des brevets

(11) **EP 4 629 212 A1**

(12) **EUROPEAN PATENT APPLICATION**
published in accordance with Art. 153(4) EPC

(43) Date of publication:
**08.10.2025 Bulletin 2025/41**

(51) International Patent Classification (IPC):
***G08G 1/01*** *(2006.01)*

(21) Application number: **22967561.6**

(22) Date of filing: **07.12.2022**

(52) Cooperative Patent Classification (CPC):
**H04W 12/12; B60W 40/10; B60W 50/0097;
B60W 50/0205; B60W 50/045; G08G 1/01;
H04W 4/46;** B60W 2050/0215

(86) International application number:
**PCT/CN2022/137262**

(87) International publication number:
**WO 2024/119401 (13.06.2024 Gazette 2024/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Shenzhen Yinwang Intelligent
Technologies Co., Ltd.
Shenzhen, Guangdong 518129 (CN)**

(72) Inventors:
• **YANG, Tianci
Shenzhen, Guangdong 518129 (CN)**
• **FENG, Xiangbing
Shenzhen, Guangdong 518129 (CN)**
• **WEI, Zhuo
Shenzhen, Guangdong 518129 (CN)**
• **YAO, Hanbo
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **ANOMALY DETECTION METHOD AND APPARATUS, AND VEHICLE**

(57)     An exception detection method and apparatus, and a vehicle are provided. The method includes: obtaining first motion status information of the vehicle, where the first motion status information is determined based on a signal of a first sensor of the vehicle and/or reference information obtained via an external communication network (S801); determining a first parameter and a second parameter based on the first motion status information, where the first parameter is associated with a status parameter indicated by the first motion status information, and the second parameter is associated with a dynamic status of the vehicle (S802); and determining, based on the first parameter and the second parameter, a location at which an exception occurs (S803). The method may be applied to an internet of things device like an intelligent vehicle or a new energy vehicle. In the method, an exception can be detected, and further, the exception can be positioned, so that the internet of things device takes a corresponding measure. This helps improve security of the internet of things device.

400

S401: Obtain first motion status information of a vehicle, where the first motion status information is determined based on a signal of a first sensor of the vehicle and/or reference information obtained via an external communication network

S402: Determine a first parameter based on the first motion status information and first prediction status information, where the first parameter includes a first residual, the first residual is associated with the first sensor, and the first prediction status information is determined based on second motion status information of the vehicle at a previous moment

S403: When a value of the first residual is greater than a first preset threshold, determine that an exception occurs on the first sensor and/or an exception occurs on an intra-vehicle network of the vehicle

FIG. 4

**Description**

**TECHNICAL FIELD**

This application relates to the field of security, and more specifically, to an exception detection method and apparatus, and a vehicle.

**BACKGROUND**

With development of intelligent driving technologies, information such as a planned route, an ego vehicle acceleration, and an ego vehicle speed can be shared between vehicles based on vehicle to vehicle (vehicle to vehicle, V2V) wireless communication, so that a vehicle can travel based on information transmitted by another vehicle. In the foregoing technology, vehicle safety heavily depends on a signal of a V2V communication network and a signal of a vehicle-mounted sensor. However, the V2V communication network and the vehicle-mounted sensor are vulnerable to attacks, causing a signal exception, and further affecting the vehicle safety. However, currently, there is no solution in which an abnormal signal can be detected in a timely and effective manner and a location at which an exception occurs can be positioned.

**SUMMARY**

This application provides an exception detection method and apparatus, and a vehicle, to accurately detect an abnormal signal and position a location at which an exception occurs, without depending on a large amount of data, so as to guide the vehicle to take a corresponding measure. This helps improve vehicle safety.

The method provided in this application may be applied to the vehicle. The vehicle may be a vehicle in a broad sense, and may be a transportation means (like a commercial vehicle, a passenger vehicle, a truck, a motorcycle, an airplane flight vehicle, a train, or a ship), an industrial vehicle (like a pallet truck, a trailer, or a tractor), an engineering vehicle (like an excavator, a bulldozer, or a crane), an agricultural device (like a lawn mower or a harvester), an entertainment device, a toy vehicle, or the like. A type of the vehicle is not specifically limited in this application.

According to a first aspect, an exception detection method is provided. The method may be performed by a vehicle, or may be performed by a chip or a circuit used in a vehicle, or may be performed by a control component like an advanced driving assistance system (advanced driving assistance system, ADAS) or a vehicle control unit (vehicle control unit, VCU). Alternatively, the method may be performed by a cloud server that communicates with the vehicle. This is not limited in this application.

The method includes: obtaining first motion status information of a vehicle, where the first motion status information is determined based on a signal of a first sensor of the vehicle and/or reference information obtained via an external communication network; determining a first parameter and a second parameter based on the first motion status information, where the first parameter is associated with a status parameter indicated by the first motion status information, and the second parameter is associated with a dynamic status of the vehicle; and determining, based on the first parameter and the second parameter, a location at which an exception occurs.

In the foregoing technical solution, a large amount of training data or statistical data is not needed, and a large amount of redundant information provided by another vehicle and/or a roadside infrastructure is not needed, whether the exception occurs on the vehicle and the location at which the exception occurs may be determined based on real-time motion status information, so that accuracy and timeliness of exception detection can be improved.

For example, the first motion status information may include one or more parameters such as a location, a speed, an acceleration, a relative distance from another vehicle, a relative speed to another vehicle, an expected acceleration, and a tracking error of the vehicle at a current moment. The expected acceleration is an acceleration that is expected to be achieved by the vehicle and that is output by a controller of the vehicle. After being executed by an actuator of the vehicle, the expected acceleration may become an actual acceleration of the vehicle.

For example, the reference information may include one or more of a speed, a location, an acceleration, a planned driving route, and a steering wheel angle of another vehicle (for example, a preceding vehicle that is closest to the vehicle) around the vehicle.

For example, the external communication network may be a vehicle to everything (vehicle to everything, V2X) communication network, or may be a vehicle to infrastructure (vehicle to infrastructure, V2I) communication network, or may be a V2V communication network, or may be another external communication network. This is not specifically limited in this application.

For example, the exception of the first sensor may be caused by a fault of the first sensor, or may be caused by an attack from an attacker on the first sensor; and the exception of an intra-vehicle network may be caused by at least one of the following: A control component like an MDC or a VDC is attacked, a CAN network is blocked, and an unauthorized device (for example, a malicious sensor or a counterfeit component) accesses the vehicle. For example, block of the CAN network may be caused by a fact that an on-board diagnostics (on-board diagnostics, OBD) system continuously sends request information to the CAN after inserting into an electronic control unit (electronic control unit, ECU).

For example, a value of the status parameter indicated by the first motion status information may be directly obtained from the first sensor of the vehicle. For example, if the status parameter is the speed, and the first sensor is a speed sensor, a specific value of the speed may be directly obtained from the speed sensor. Alternatively, a value of the status parameter indicated by the first motion status information may be determined by calculating the signal of the first sensor of the vehicle. For example, if the status parameter is the relative speed between the vehicle and the another vehicle, and the first sensor may be a millimeter-wave radar, a specific value of the relative speed may be determined through calculation based on a signal of the millimeter-wave radar. Alternatively, a value of the status parameter indicated by the first motion status information may be determined by calculating the reference information. For example, if the status parameter is the expected acceleration, a specific value of the expected acceleration may be determined through calculation based on the information, such as the planned driving route, the speed, and the acceleration, that is of the preceding vehicle closest to the vehicle and that is included in the reference information. Alternatively, a value of the status parameter indicated by the first motion status information may be determined by calculating the signal of the first sensor and the reference information. For example, if the status parameter is the expected acceleration, the reference information includes only the planned driving route of the preceding vehicle closest to the vehicle, and the first sensor is a millimeter-wave radar, a specific value of the expected acceleration may be determined through calculation based on the planned driving route of the preceding vehicle closest to the vehicle and a signal of the millimeter-wave radar.

With reference to the first aspect, in some implementations of the first aspect, the determining a first parameter and a second parameter based on the first motion status information includes: determining the first parameter based on the first motion status information and first prediction status information, where the first parameter includes a first residual (residual or innovation), the first residual is associated with the first sensor, and the first prediction status information is determined based on second motion status information of the vehicle at a previous moment; and the determining, based on the first parameter and the second parameter, a location at which an exception occurs includes: when a value of the first residual is greater than a first preset threshold, determining that the exception occurs on the first sensor and/or the exception occurs on an intra-vehicle network of the vehicle.

For example, the intra-vehicle network may include one or more of a controller area network (controller area network, CAN), a local interconnect network (local interconnect network, LIN), a controller area network-flexible data rate (controller area network-flexible data, CAN-FD), and an Ethernet (Ethernet).

For example, the first preset threshold may be determined based on an inherent property of the first sensor. For example, the first preset threshold may be determined based on a noise threshold of the first sensor. For example, the first sensor is a millimeter-wave radar. The first residual is a residual corresponding to a relative speed signal. The first preset threshold may be 0.1 m/s, or may be 0.15 m/s, or may be another value. The first preset threshold may be determined through theoretical calculation, or may be determined by using a machine learning algorithm. This is not specifically limited in this application.

For example, "the first residual is associated with the first sensor" may be understood as that the value of the first residual is determined based on the signal of the first sensor. It may be understood that, when the first sensor is attacked or faulty, the signal of the first sensor is abnormal; or when the exception occurs on the intra-vehicle network, the signal of the first sensor transmitted in the intra-vehicle network may be abnormal. The exception may cause the value of the first residual to be greater than the first preset threshold. Therefore, whether the exception occurs on the first sensor and/or the exception occurs on the intra-vehicle network may be determined based on a relationship between the value of the first residual and the first preset threshold.

In some possible implementations, when the first parameter includes only the first residual, it cannot be determined whether the exception specifically occurs on the sensor or the intra-vehicle network. When the first parameter further includes a third residual, the specific location at which the exception occurs may be determined based on the first residual and the third residual. For example, the first parameter further includes the third residual, the third residual is also associated with the first sensor of the vehicle, and the method further includes: when the value of the first residual is greater than the first preset threshold, and a value of the third residual is greater than a third preset threshold, determining that the exception occurs on the first sensor.

In comparison with conventional exception detection performed based on a statistical method and a machine learning algorithm, in the foregoing technical solution, a large amount of training data or statistical data is not needed, and a large amount of redundant information provided by another vehicle and/or roadside infrastructure is not needed, where whether the vehicle is abnormal may be determined based on the real-time motion status information of the vehicle and the motion status information of the vehicle at the previous moment, so that accuracy and timeliness of exception detection can be improved.

With reference to the first aspect, in some implementations of the first aspect, the first parameter further includes a second residual, the second residual is associated with a second sensor of the vehicle, and the determining a first parameter and a second parameter based on the first motion status information includes: determining the second parameter based on the first parameter; and when the first motion status information is associated with the external communication network, the determining, based on the first parameter and the second parameter, a location at which an exception occurs includes: when a value of each residual in the first parameter is less than or equal to a preset threshold corresponding to the residual, and the second parameter is greater than a second preset threshold, determining that the exception occurs on the external communication network.

For example, the exception of the external communication network may be caused by at least one of the following: The external communication network of the vehicle is attacked, another vehicle or device (like a server or roadside infrastructure) deliberately sends exception reference information, and reference information is abnormal due to a fault or an attack on another vehicle or device.

For example, "the second residual is associated with the second sensor of the vehicle" may be understood as that a value of the second residual is determined based on a signal of the second sensor. In some possible implementations, the first sensor and the second sensor are a same sensor.

That the first motion status information is associated with the external communication network includes: The first motion status information is determined based on the reference information received via the external communication network, or the first motion status information is determined based on the signal of the first sensor and the reference information.

For example, the second parameter may be a quadratic form of the first parameter. In some possible implementations, the second parameter may indicate impact of at least one of an abnormal signal of the first sensor, an abnormal signal of the intra-vehicle network, and an abnormal signal of the external communication network on a dynamic status of the vehicle. It should be understood that the foregoing noise may include inherent noise of a sensor or a communication network, or may include a signal perturbation caused by an attack or a fault.

In some possible implementations, if the first parameter includes only the first residual and the second residual, that "the value of each residual in the first parameter is less than or equal to the corresponding preset threshold" may be understood as: The value of the first residual is less than or equal to the first preset threshold, and the value of the second residual is less than or equal to the preset threshold corresponding to the second residual. If the first parameter further includes the third residual in addition to the first residual and the second residual, "the value of each residual in the first parameter is less than or equal to the corresponding preset threshold" may be understood as: The value of the first residual is less than or equal to the first preset threshold, the value of the second residual is less than or equal to the preset threshold corresponding to the second residual, and the value of the third residual is less than or equal to the preset threshold corresponding to the third residual.

For example, the second preset threshold may be 1, or may be another value. This is not specifically limited in this application.

In the foregoing technical solution, exception positioning may be further performed based on the first parameter and the second parameter. Specifically, it may be determined, based on a value of the residual in the first parameter and the second parameter, which part of the external communication network, the sensor, and the intra-vehicle network of the vehicle is abnormal. This helps subsequently take a series of measures for the exception. For example, the external communication network is a V2V communication network. After it is determined that the exception occurs on the V2V communication network, the vehicle may be controlled to disable an intelligent driving function or disable an external communication function, or the intelligent driving function may be maintained, and external communication is performed via a standby V2V communication network. It can be learned that the foregoing technical solution helps improve vehicle safety and driving experience.

With reference to the first aspect, in some implementations of the first aspect, the determining the first parameter based on the first motion status information and first prediction status information includes: determining a third parameter based on the second motion status information and second prediction status information of the vehicle at the previous moment; determining a fourth parameter based on the first motion status information and the first prediction status information; and determining the first parameter based on the third parameter and the fourth parameter.

For example, the first parameter may be a sum of the third parameter and the fourth parameter. For example, the first residual in the first parameter is determined based on the signal of the first sensor. In this technical solution, the first residual may be understood as being determined based on a sum of a residual determined based on the signal of the first sensor at the previous moment and a residual determined based on the signal of the first sensor at the current moment.

In the foregoing technical solution, whether an accumulated value of residuals within specific duration is greater than a preset threshold is determined. When the accumulated value is greater than the preset threshold, it is considered that the exception occurs on the first sensor and/or the exception occurs on the intra-vehicle network. This solution can reduce impact of accidentality of a residual signal at a single moment on a detection result, help improve a detection rate, and further improve accuracy of exception detection.

With reference to the first aspect, in some implementations of the first aspect, the first sensor includes at least one of the following: a lidar, a millimeter-wave radar, an ultrasonic radar, a speed sensor, an acceleration sensor, a camera apparatus, and a global navigation satellite system (global navigation satellite system, GNSS).

For example, the acceleration sensor may include an inertia measurement unit (Inertia Measurement Unit, IMU), and an accelerometer; and the speed sensor may include a rotation speed sensor, and a wheel speed sensor.

With reference to the first aspect, in some implementations of the first aspect, the status parameter indicated by the first motion status information includes at least one of the following of the vehicle at a current moment: a location, a speed, an acceleration, a relative speed to another vehicle, an expected acceleration, and a tracking error; and the expected acceleration is an expected acceleration of the vehicle that is determined based on the reference information and/or the signal of the first sensor.

With reference to the first aspect, in some implementations of the first aspect, the method further includes: sending, to a controller of the vehicle, information indicating that the exception occurs on the first sensor and/or the exception occurs on the internal communication network, so that the controller controls an intelligent driving level to be lowered or an intelligent driving function to be disabled.

In the foregoing technical solution, when it is detected that the exception occurs on the vehicle, the controller of the vehicle is notified that the exception occurs at a corresponding location. This helps the vehicle take a corresponding measure in a timely manner, and helps improve vehicle safety.

According to a second aspect, an exception detection apparatus is provided. The apparatus includes: an obtaining unit, configured to obtain first motion status information of a vehicle, where the first motion status information is determined based on a signal of a first sensor of the vehicle and/or reference information obtained via an external communication network; a first determining unit, configured to determine a first parameter and a second parameter based on the first motion status information, where the first parameter is associated with a status parameter indicated by the first motion status information, and the second parameter is associated with a dynamic status of the vehicle; and a second determining unit, configured to determine, based on the first parameter and the second parameter, a location at which an exception occurs.

With reference to the second aspect, in some implementations of the second aspect, the first determining unit is configured to: determine the first parameter based on the first motion status information and first prediction status information, where the first parameter includes a first residual, the first residual is associated with the first sensor, and the first prediction status information is determined based on second motion status information of the vehicle at a previous moment; and the second determining unit is configured to: when a value of the first residual is greater than a first preset threshold, determine that the exception occurs on the first sensor and/or the exception occurs on an intra-vehicle network of the vehicle.

With reference to the second aspect, in some implementations of the second aspect, the first parameter further includes a second residual, the second residual is associated with a second sensor of the vehicle, and when the first motion status information is associated with the external communication network, the first determining unit is further configured to: determine the second parameter based on the first parameter; and the second determining unit is further configured to: when a value of each residual in the first parameter is less than or equal to a preset threshold corresponding to the residual, and the second parameter is greater than a second preset threshold, determine that the exception occurs on the external communication network.

With reference to the second aspect, in some implementations of the second aspect, the first determining unit is configured to: determine a third parameter based on the second motion status information and second prediction status information of the vehicle at the previous moment; determine a fourth parameter based on the first motion status information and the first prediction status information; and determine the first parameter based on the third parameter and the fourth parameter.

With reference to the second aspect, in some implementations of the second aspect, the first sensor includes at least one of the following: a lidar, a millimeter-wave radar, an ultrasonic radar, a speed sensor, an acceleration sensor, a camera apparatus, and a global navigation satellite system GNSS.

With reference to the second aspect, in some implementations of the second aspect, the status parameter indicated by the first motion status information includes at least one of the following of the vehicle at a current moment: a location, a speed, an acceleration, a relative speed to another vehicle, an expected acceleration, and a tracking error; and the expected acceleration is an expected acceleration of the vehicle that is determined based on the reference information and/or the signal of the first sensor.

With reference to the second aspect, in some implementations of the second aspect, the apparatus further includes a transceiver unit, configured to send, to a controller of the vehicle, information indicating that the exception occurs on the first sensor and/or the exception occurs on the internal communication network, so that the controller controls an intelligent driving level to be lowered or an intelligent driving function to be disabled.

According to a third aspect, an exception detection apparatus is provided. The apparatus includes a processing unit and a storage unit. The storage unit is configured to store instructions, and the processing unit executes the instructions stored in the storage unit, so that the apparatus performs the method in any possible implementation of the first aspect.

Optionally, the processing unit may include at least one processor, and the storage unit may be a memory. The memory may be a storage unit (for example, a register or a cache) in a chip, or may be a storage unit (for example, a read-only memory, or a random access memory) located outside a chip in a moving carrier.

According to a fourth aspect, a vehicle is provided. The vehicle includes the apparatus in any possible implementation of the second aspect or the third aspect.

According to a fifth aspect, a server is provided. The server includes the apparatus in any possible implementation of the second aspect or the third aspect.

According to a sixth aspect, an exception detection system is provided. The system includes a server and a vehicle. The server obtains first motion status information of the vehicle, where the first motion status information is determined based on a signal of a first sensor of the vehicle and/or reference information obtained via an external communication network. The server determines a first parameter based on the first motion status information and first prediction status information, where the first parameter includes a first residual, the first residual is associated with the first sensor, and the first prediction status information is determined based on second motion status information of the vehicle at a previous moment. When a value of the first residual is greater than a first preset threshold, the server determines that an exception occurs on the first sensor and/or an exception occurs on an intra-vehicle network of the vehicle. The server sends information indicating the exception to the vehicle. The vehicle control, based on the exception, an intelligent driving level to be lowered or an intelligent driving function to be disabled.

According to a seventh aspect, a computer program product is provided. The computer program product includes computer program code. When the computer program code is run on a computer, the computer is enabled to perform the method in any possible implementation of the first aspect.

It should be noted that all or some of the computer program code may be stored in a first storage medium. The first storage medium may be packaged together with a processor, or may be packaged separately from a processor. This is not specifically limited in this application.

According to an eighth aspect, a computer-readable medium is provided. The foregoing computer-readable medium stores instructions, and when the instructions are executed by a processor, the processor is enabled to implement the method in any possible implementation of the first aspect.

According to a ninth aspect, a chip is provided. The chip includes a circuit. The circuit is configured to perform the method in any possible implementation of the first aspect.

## BRIEF DESCRIPTION OF DRAWINGS

FIG. 1 is a functional block diagram of a vehicle according to an embodiment of this application;
FIG. 2 is a diagram of a residual-based detector according to an embodiment of this application;
FIG. 3 is a diagram of an exception detection system architecture according to an embodiment of this application;
FIG. 4 is a schematic flowchart of an exception detection method according to an embodiment of this application;
FIG. 5(a) to FIG. 5(c) are a diagram of a residual change when detection is performed in a method according to an embodiment of this application;
FIG. 6(a) to FIG. 6(c) are a diagram of a residual change when detection is performed in a method according to an embodiment of this application;
FIG. 7(a) to FIG. 7(c) are a diagram of a residual change when detection is performed in a method according to an embodiment of this application;
FIG. 8 is a schematic flowchart of an exception detection method according to an embodiment of this application;
FIG. 9 is a block diagram of an exception detection apparatus according to an embodiment of this application; and
FIG. 10 is a block diagram of an exception detection apparatus according to an embodiment of this application.

## DESCRIPTION OF EMBODIMENTS

In descriptions of embodiments of this application, unless otherwise specified, "/" means "or". For example, A/B may indicate A or B. In this specification, "and/or" describes only an association relationship between associated objects and indicates that three relationships may exist. For example, A and/or B may indicate the following three cases: Only A exists, both A and B exist, and only B exists. In this application, at least one means one or more, and a plurality of means two or more. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

Prefix words "first", "second", and the like in embodiments of this application are merely intended to distinguish between different objects, and impose no limitation on locations, sequences, priorities, quantities, content, or the like of the described objects. Use of prefixes such as ordinal numbers used to distinguish the described objects in embodiments of this application does not constitute a limitation on the described objects. For descriptions of the described objects, refer to the context description in claims or embodiments, and the use of such prefixes should not constitute a redundant limitation.

As described above, with development of intelligent driving technologies, information that can enable another vehicle to plan a driving parameter, such as a planned route, an ego vehicle acceleration, and an ego vehicle speed can be shared between vehicles based on a V2V communication network, where the driving parameter includes but is not limited to a driving speed, a driving acceleration, and a driving route. A collaborative intelligent driving system can effectively improve efficiency and safety of intelligent transportation, and reduce energy consumption. The safety of the cooperative intelligent driving system heavily depends on the V2V communication network and a vehicle-mounted sensor. However, both the V2V communication network and the vehicle-mounted sensor may be abnormal, and further, the safety of the cooperative intelligent driving system is affected. For example, the V2V communication network is vulnerable to attacks such as Sybil (Sybil), denial of service (denial of service), bogus (bogus), and replay (replay). Consequently, a V2V communication process is delayed or blocked. In addition, an attacker may further transmit an attack signal to a vehicle via the V2V communication network. An attack of the attacker may be prevented to some extent by using an identity authentication technology, but some malicious signals of the V2V network sent by authorized vehicles to satisfy personal interests cannot be prevented. A signal of the vehicle-mounted sensor may also be abnormal due to a fault of the sensor or a network attack. As a result, information sent to another vehicle is abnormal.

In a current technical background, exception detection is usually performed on a signal of the V2V communication network and the signal of the vehicle-mounted sensor based on a statistical method and a machine learning algorithm. However, the methods both depend on a data amount. Accuracy of exception detection based on the machine learning algorithm depends on data richness of a training set. When the data amount is insufficient, it is difficult to summarize a statistical feature of an abnormal signal. Therefore, in a current technology, an abnormal signal may be mistakenly detected or missing from detection.

In view of this, this application provides an exception detection method and apparatus, and a vehicle, to determine, based on real-time motion status information of the vehicle, whether an exception occurs on the vehicle, and determine, based on values of parameters determined based on the motion status information and prediction parameter information, a location at which the exception occurs. This can accurately detect an abnormal signal and position the location at which the exception occurs, without depending on a large amount of data, to guide the vehicle to take a corresponding measure. This helps improve vehicle safety.

The following describes technical solutions of embodiments in this application with reference to accompanying drawings.

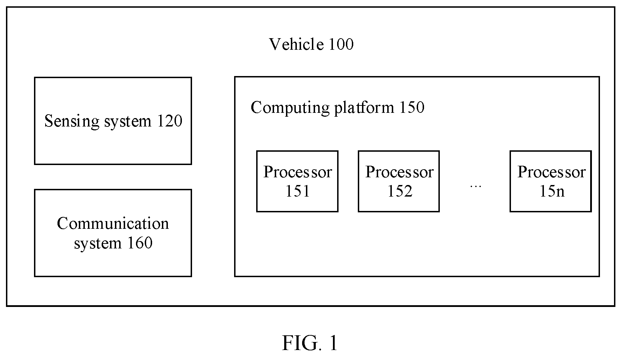

FIG. 1 is a functional block diagram of a vehicle 100 according to an embodiment of this application. The vehicle 100 may include a sensing system 120, a computing platform 150, and a communication system 160. The sensing system 120 may include one or more sensors that sense and measure information about an environment around the vehicle 100. For example, the sensing system 120 may include a positioning system. The positioning system may be a global positioning system (global positioning system, GPS), or may be one or more of a BeiDou system or another positioning system, an IMU, a lidar, a millimeter-wave radar, an ultrasonic radar, and a camera apparatus.

Some or all functions of the vehicle 100 may be controlled by the computing platform 150. The computing platform 150 may include processors 151 to 15n (n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In a reconfigurable hardware circuit, a process in which the processor loads a configuration document to implement hardware circuit configuration may be understood as a process in which the processor loads instructions to implement functions of some or all of the units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory to execute the instructions, to implement corresponding functions.

The vehicle 100 exchanges information with a cloud server, another vehicle, and a roadside infrastructure by using the communication system 160.

In some possible implementations, the vehicle 100 may include an ADAS. The ADAS uses one or more sensors (including but not limited to a lidar, a millimeter-wave radar, a camera apparatus, an ultrasonic sensor, a global positioning system, and an inertial measurement unit) in the sensing system 120 and/or the communication system 160, to obtain information around the vehicle, and analyzes and processes the obtained information, to implement functions such as obstacle detection, target recognition, vehicle positioning, adaptive cruise control, route planning, and driver monitoring/reminding, so as to improve driving safety, automation, and comfort of the vehicle.

At different intelligent driving levels (L0 to L5), the ADAS may implement different levels of autonomous driving assistance based on information obtained by using an artificial intelligence algorithm and a plurality of sensors. The foregoing intelligent driving levels (L0 to L5) are based on a grading standard of the society of automotive engineers (society of automotive engineers, SAE). The level L0 indicates no automation, a level L1 indicates driving assistance, a level L2 indicates partial automation, a level L3 indicates conditional automation, a level L4 indicates high automation, and the level L5 indicates full automation. Tasks that are of monitoring and responding to road conditions and that are at the levels L1 to L3 are jointly completed by a user and the system, and the user needs to take over a dynamic driving task. The levels L4 and L5 enable the user to be completely transformed into a passenger. Currently, functions that can be implemented by the ADAS mainly include but are not limited to adaptive cruise, automatic emergency braking, automatic parking, blind spot monitoring, traffic warning/braking at front crossroads, traffic warning/braking at rear crossroads, preceding vehicle collision warning, lane departure warning, lane keeping assistance, trailing vehicle anti-collision warning, traffic sign recognition, traffic jam assistance, highway assistance, and the like. It should be understood that the foregoing functions may have specific modes at different intelligent driving levels (L0 to L5). A higher intelligent driving level indicates a more intelligent corresponding mode, and requires higher precision of a sensing algorithm and higher precision of a planning and control algorithm.

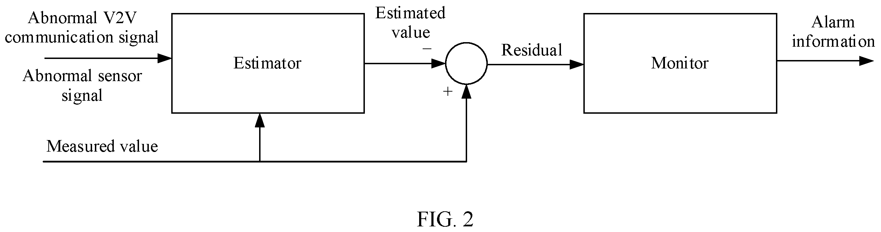

FIG. 2 is a diagram of an exception detection system architecture according to an embodiment of this application. This system may be disposed on the computing platform shown in FIG. 1, or may be disposed on the cloud server. The cloud server may be connected to the vehicle 100 shown in FIG. 1, to perform exception detection on the vehicle 100. The system includes a state estimator (estimator) and a monitor (monitor). The monitor is configured to detect whether an exception occurs on a vehicle, and the state estimator is configured to determine, based on a value of a residual, that an exception specifically occurs on a sensor, an intra-vehicle communication network (referred to as an intra-vehicle network for short below), or an external communication network. For example, the residual is a difference between an estimated value and a measured value of a sensor at a current moment, and the estimated value of the sensor is obtained through prediction based on a measured value of the sensor that is not attacked or that is normal at a previous moment. In some possible implementations, a function of the state estimator may alternatively be implemented by a Kalman filter.

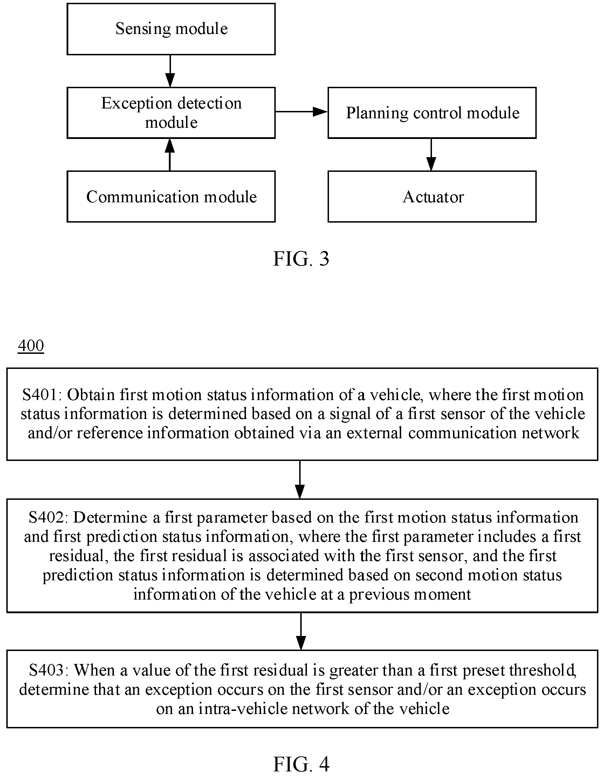

FIG. 3 is a diagram of another exception detection system architecture according to an embodiment of this application. For example, a system shown in FIG. 3 may be all disposed in the vehicle 100 shown in FIG. 1, or may be partially disposed in the vehicle 100 shown in FIG. 1 and partially disposed in the cloud server. For example, an exception detection module is disposed in the cloud server, and modules other than the exception detection module in the system shown in FIG. 3 are disposed in the vehicle 100 shown in FIG. 1. The system includes a sensing module, a communication module, the exception detection module, a planning control module, and an actuator. The sensing module may include one or more sensors in the sensing system 120 shown in FIG. 1. The communication module may include the communication system 160 shown in FIG. 1, the communication module may obtain reference information via an external communication network, and the vehicle may plan a driving parameter like a speed, an acceleration, or a driving route based on the reference information. The exception detection module may include the system shown in FIG. 2, and is configured to: detect whether an exception occurs on the vehicle and perform positioning. The planning control module is configured to control the vehicle based on indication information output by the exception detection module. In an example, the vehicle is a CACC-based vehicle. When the exception detection module outputs indication information indicating that an exception occurs on a V2V communication network, the planning control module controls, based on the indication information, the vehicle to degrade from CACC to ACC. In another example, when the exception detection module outputs indication information indicating that an exception occurs on a sensor and/or an exception occurs on an internal communication network, the planning control module controls, based on the indication information, an intelligent driving function to be disabled, or controls an intelligent driving level to be downgraded from a higher level to a lower level (for example, from L3 to L1). In still another example, when the exception detection module outputs indication information indicating that the vehicle is normal, the planning control module plans a motion track, calculates a corresponding control quantity based on the planned motion track, and outputs the control quantity to the actuator. When executing the control quantity, the actuator controls the vehicle to travel along the planned motion track. In some possible implementations, the actuator may further include steering and braking control systems in the vehicle 100.

For example, the intelligent driving function in this application is a function that is implemented by using a software program and that is used to control the vehicle, and may include but is not limited to a route planning function, a sensing function, a fusion function, an adaptive cruise control (adaptive cruise control, ACC) function, a navigation cruise assistant (navigation cruise assistant, NCA) function, and an integrated cruise assistant (integrated cruise assistant, ICA) function. Disabling the intelligent driving function may include disabling one or more of the functions.

It should be understood that the foregoing modules are merely examples. In actual application, the foregoing modules may be added or deleted based on an actual requirement. For example, in the system architecture shown in FIG. 3, the exception detection module and the planning control module may be combined into one module.

FIG. 4 is a schematic flowchart of an exception detection method 400 according to an embodiment of this application. For example, the method 400 may be applied to the vehicle 100 shown in FIG. 1, or may be performed by the system shown in FIG. 2, or may be performed by the exception detection module in the system shown in FIG. 3. The method 400 may include the following steps.

S401: Obtain first motion status information of a vehicle, where the first motion status information is determined based on a signal of a first sensor of the vehicle and/or reference information obtained via an external communication network.

For example, the vehicle may be the vehicle 100 in the foregoing embodiment, or may be another vehicle.

For example, the first sensor may include at least one of the following: a lidar, a millimeter-wave radar, an ultrasonic radar, a speed sensor, an acceleration sensor, a camera apparatus, and a GNSS.

For example, the first motion status information includes at least one of the following of the vehicle at a current moment: a location, a speed, an acceleration, a relative speed to another vehicle, an expected acceleration, and a tracking error; and the expected acceleration is an acceleration that is expected to be achieved by the vehicle and that is determined based on the reference information and/or the signal of the first sensor.

For example, the reference information may include but is not limited to information such as a planned driving route, a speed, and an acceleration of a vehicle around the vehicle.

In some possible implementations, the external communication network may be a V2X communication network, a V2I communication network, a V2V communication network, or another external communication network. This is not specifically limited in embodiments of this application.

S402: Determine a first parameter based on the first motion status information and first prediction status information, where the first parameter includes a first residual, the first residual is associated with the first sensor, and the first prediction status information is determined based on second motion status information of the vehicle at a previous moment.

For example, the first motion status information may be the measured value shown in FIG. 2, and the first prediction status information may be the estimated value shown in FIG. 2.

S403: When the first residual is greater than a first preset threshold, determine that an exception occurs on the first sensor and/or an exception occurs on an intra-vehicle network of the vehicle.

For example, the intra-vehicle network may include one or more of the Ethernet, a CAN, a LIN, and a CAN-FD.

It should be understood that, when the first sensor is attacked or faulty, the signal of the first sensor is abnormal; or when the exception occurs on the intra-vehicle network, the signal of the first sensor transmitted in the intra-vehicle network may be abnormal. The exception may cause the first residual to be greater than the first preset threshold. Therefore, whether the exception occurs on the first sensor and/or the exception occurs on the intra-vehicle network may be determined based on a relationship between the first residual and the first preset threshold.

For example, the first sensor is a millimeter-wave radar. The first residual is a residual corresponding to a relative speed signal. The first preset threshold may be 0.1 m/s, or may be 0.15 m/s, or may be another value. The first preset threshold may be determined based on an inherent property of the first sensor. For example, the first preset threshold may be determined based on a noise threshold of the first sensor. Specifically, the first preset threshold may be determined through theoretical calculation, or may be determined by using a machine learning algorithm. This is not specifically limited in embodiments of this application.

In some possible implementations, the first parameter further includes a second residual, the second residual is associated with a second sensor of the vehicle, and when the first motion status information is associated with the external communication network, a second parameter is determined based on the first parameter. When each residual in the first parameter is less than or equal to a preset threshold corresponding to the residual, and the second parameter is greater than a second preset threshold, it is determined that the exception occurs on the external communication network.

For example, the second preset threshold may be 1, or may be another value. This is not specifically limited in embodiments of this application.

It may be understood that the second parameter may indicate impact of at least one of an abnormal signal of the first sensor, an abnormal signal of the intra-vehicle network, and an abnormal signal of the external communication network on a dynamic status of the vehicle. Therefore, when the exception occurs on the first sensor and/or the exception occurs on the intra-vehicle network, the second parameter may also be greater than the second preset threshold.

Optionally, determining the first parameter based on the first motion status information and the first prediction status information includes: determining a third parameter based on the second motion status information and second prediction status information of the vehicle at the previous moment; determining a fourth parameter based on the first motion status information and the first prediction status information; and determining the first parameter based on the third parameter and the fourth parameter.

It may be understood that the second prediction status information is determined based on motion status information of the vehicle, that is, the second motion status information is a measured value at the previous moment, and the second prediction status information is an estimated value at the previous moment.

In comparison with conventional exception detection performed based on a statistical method and a machine learning algorithm, in the exception detection method provided in this embodiment of this application, a large amount of training data or statistical data is not needed, and redundant information provided by another vehicle and/or a roadside infrastructure is not needed, where whether the exception occurs on the vehicle may be determined based on real-time motion status information of the vehicle and the motion status information of the vehicle at the previous moment, so that accuracy and timeliness of exception detection can be improved. Further, exception positioning may be further performed based on the first parameter and the second parameter. Specifically, it may be determined, based on a value of the residual in the first parameter and the second parameter, which part of the external communication network, the sensor, and the intra-vehicle network of the vehicle is abnormal. This helps subsequently take a series of measures for the exception, and helps improve vehicle safety and driving experience.

In some possible implementations, the exception detection method 400 may be implemented by using a state estimator and a monitor.

For example, the following uses an example in which the vehicle is an ith vehicle in a vehicle platoon (platoon) that is based on cooperative and adaptive cruise control (cooperative and adaptive cruise control, CACC), to describe a design method of the state estimator and the monitor in embodiments of this application with reference to step 1 to step 3 below. It should be understood that the CACC is a type of cooperative intelligent driving system. Each vehicle in the CACC may learn of a status of another vehicle in a future period of time based on information that is shared by a surrounding vehicle in real time and that is received via the V2V communication network, to make a response in advance.

Step 1: Construct the following vehicle system model for a longitudinal motion status of the vehicle:

$$
\dot{x}_i = \begin{bmatrix} 0 & 0 & -h & 0 & 1 & 0 \\ 0 & 0 & 1 & 0 & 0 & 0 \\ 0 & 0 & -\dfrac{1}{\tau} & \dfrac{1}{\tau} & 0 & 0 \\ \dfrac{k_p}{h} & 0 & -k_d & -\dfrac{1}{h} & \dfrac{k_{id}}{h} & 0 \\ 0 & 0 & -1 & 0 & 0 & 1 \\ 0 & 0 & 0 & 0 & 0 & -\dfrac{1}{\tau} \end{bmatrix} x_i + \begin{bmatrix} 0 \\ 0 \\ 0 \\ 0 \\ 0 \\ -\dfrac{1}{\tau} \end{bmatrix} u_{i-1} + \begin{bmatrix} 0 \\ 0 \\ 0 \\ -\dfrac{1}{h} \\ 0 \\ 0 \end{bmatrix} (u_{i-1} + \delta_i + \omega_{ui}),
$$

$$
= A_c x_i + B_{c1} u_{i-1} + B_{c2}(u_{i-1} + \delta_i + \omega_{ui}). \tag{1}
$$

Herein, $x_i = [\xi_i\, v_i\, a_i\, u_i\, \Delta v_i\, a_{i-1}]^T$, ($[\cdot]^T$ indicates transposition of a matrix). $\dot{x}_i$ is a derivative of $x_i$ with respect to time. $\xi_i$ is a tracking error. $v_i$ is an actual speed of the ith vehicle. $a_i$ and $a_{i-1}$ are respectively actual accelerations of the ith vehicle and an (i-1)th vehicle. $\Delta v_i$ is a relative speed between the ith vehicle and the (i-1)th vehicle. $u_i$ and $u_{i-1}$ are respectively expected accelerations of the ith vehicle and the (i-1)th vehicle. $\delta_i$ is an abnormal signal of the V2V communication network, and may be injected by a malicious vehicle, or may be caused by the exception of the V2V network. $\omega_{ui}$ is a perturbation existing in the V2V communication network, may be caused by a network packet loss, a delay, quantization, or another factor, and

meets $\omega_{ui}^T(t)\omega_{ui}(t) \le \overline{\omega}_1$, where $\overline{\omega}_1$ is a perturbation boundary, and $\overline{\omega}_1 \in \mathbb{R}_{>0}$. It should be understood that

$\mathbb{R}_{>0}$ is a positive real number set. K = $[k_p\, k_d]$ is a gain of a controller of the vehicle, $h$ is a time interval constant, $\tau$ indicates a power train dynamics constant, and $k_p$ and $k_d$ are also constants. The controller is configured to meet a requirement of basic vehicle control performance. For example, the basic vehicle control performance includes stability of a vehicle tracking error system, a convergence rate meeting a requirement of the vehicle tracking error system, and string stability of a vehicle queue.

It should be noted that, in this embodiment of this application, the actual speed $v_i$ and the actual acceleration $a_i$ of the vehicle may be respectively obtained through measurement by the speed sensor and the acceleration sensor of the vehicle, the relative speed $\Delta v_i$ between the ith vehicle and the (i-1)th vehicle may be determined by the vehicle by processing radar (for example, a lidar, a millimeter-wave radar, or an ultrasonic radar) data, the expected acceleration $u_i$ of the vehicle is determined by processing the reference information obtained from another vehicle via the V2V communication network, for example, the reference information may include information such as a speed, an acceleration, and a driving route of the another vehicle, and $u_i$ is an acceleration that is expected to be achieved by the ego vehicle and that is determined based on the foregoing information. The tracking error $\xi_i(k) = d_i(k) - (s_i + hv_i(k))$, where $d_i(k)$ is an actual distance between the ith vehicle and the (i-1)th vehicle at a kth moment, and may be obtained through radar measurement.

$s_j + hv_i(k)$ is an expected distance between the $i^{th}$ vehicle and the $(i-1)^{th}$ vehicle at the $k^{th}$ moment. $v_i(k)$ is a speed of the $i^{th}$ vehicle at the $k^{th}$ moment, and may be obtained through measurement by the speed sensor. $h$ is a time interval in which the vehicle expects to maintain a specific speed. A specific value of $h$ may be set by a user of the vehicle, or may be a default value at delivery of the vehicle. This is not specifically limited in embodiments of this application. $s_j$ is an expected distance (or referred to as a standstill distance, standstill distance) between two vehicles when the vehicle stops. A specific value of $s_j$ may be a default value at delivery of the vehicle. In some possible implementations, the specific value of $s_j$ varies with a vehicle model of the vehicle. For example, for a small vehicle, $s_j$ may be 4.92 feet, or may be any value from 4.5 feet to 5.5 feet. For a truck, the value may be greater than 5.5 feet.

It is assumed that each vehicle has a millimeter-wave radar, an acceleration sensor, and a speed sensor, and $\xi_i$, $v_i$, $a_i$, $u_i$, $\Delta v_i$ may be directly or indirectly measured. In this case, sensor signals of the vehicle may be represented as follows:

$$y_i = \begin{bmatrix} 1 & 0 & 0 & 0 & 0 & 0 \\ 0 & 1 & 0 & 0 & 0 & 0 \\ 0 & 0 & 1 & 0 & 0 & 0 \\ 0 & 0 & 0 & 1 & 0 & 0 \\ 0 & 0 & 0 & 0 & 1 & 0 \end{bmatrix} x_i + \omega_i + \delta_i{}',$$

$$= Cx_i + \omega_i + \delta_i{}'. \tag{2}$$

Herein, $\omega_i$ is sensor noise and meets $\omega_i^T(t)\omega_i(t) \leq \overline{\omega}_2$, $\overline{\omega}_2$ is a perturbation boundary, and $\overline{\omega}_2 \in \mathbb{R}_{>0}$. The perturbation boundary is determined by inherent properties of the sensor and the intra-vehicle network, or may be determined by using a machine learning method. This is not specifically limited in embodiments of this application. $\omega_i = [\omega_{i1} \; \omega_{i2} \; \omega_{i3} \; \omega_{i4} \; \omega_{i5}]^T$, which respectively correspond to noise of signals $\xi_i$, $v_i$, $a_i$, $u_i$, $\Delta v_i$. $\delta_i{}'$ is an abnormal signal of the sensor, which may be caused by a sensor fault, a malicious sensor attack, or an intra-vehicle network exception. When the vehicle is in an abnormal state, all received network signals are discrete. Therefore, the following system model is obtained by performing discretization on Formula (1) and Formula (2):

$$x_i(k+1) = Ax_i(k) + B_1 u_i(k) + B_2(u_{i-1}(k) + \delta_i(k) + \omega_{ui}(k)), \text{ and}$$

$$y_i(k) = Cx_i(k) + \omega_i(k) + \delta_i{}'(k). \tag{3}$$

Herein, $A = e^{A_c T_s}$, $B_1 = \int_0^{T_s} e^{A_c(T_s - s)} B_{c1} ds$, $B_2 = \int_0^{T_s} e^{A_c(T_s - s)} B_{c2} ds$, e are natural constants, and $x_i(k)$ is a state value of the vehicle at a moment k.

Step 2: Design the state estimator of the vehicle based on the vehicle system model as follows:

$$\hat{x}_i(k+1) = A\hat{x}_i(k) + B_e\big(u_{i-1}(k) + \delta_i(k) + \omega_{ui}(k)\big)$$

$$+ L\big(y_i(k+1) - CA\hat{x}_i(k)\big) - LCB_e\big(u_{i-1}(k) + \delta_i(k) + \omega_{ui}(k)\big). \tag{4}$$

Herein, L is a gain of a to-be-determined state estimator, $B_e = \int_0^{T_s} e^{A_c(T_s - s)} B_{ce} ds$ and $B_{ce} = \begin{bmatrix} 0 & 0 & 0 & \frac{1}{h} & 0 & \frac{1}{\tau} \end{bmatrix}^T$.

If an estimation error of the state estimator is $e_i(k) = \hat{x}_i(k) - x_i(k)$, dynamics of $e_i(k)$ may be described according to the following formula:

$$e_i(k+1) = \overline{A}e_i(k) - B_1\big(\delta_i(k) + \omega_{ui}(k)\big) - L\omega_i(k+1) - L\delta_i{}'(k+1). \tag{5}$$

Herein, $\overline{A} = (I - LC)A$, and $\overline{L} = I - LC$. The gain L of the state estimator may be determined by solving a linear matrix inequality (linear matrix inequality, LMI), so that when there is no exception on the intra-vehicle network, the sensor of the vehicle, and the V2V communication network (that is, $\delta_i(k) = 0$, and $\delta_i{}'(k) = 0$), $\hat{x}_i(k)$ is close to $x_i(k)$, that is, the estimation error $e_i(k)$ is close to 0. For a specific design method, refer to a design of a Luenberger (Luenberger) estimator.

$$\text{If } r_i(k+1) = y_i(k+1) - C\left(A\hat{x}_i(k) + B_e\left(u_{i-1}(k) + \delta_i(k) + \omega_{ui}(k)\right)\right), \qquad (6)$$

the following formula may be obtained:

$$e_i(k+1) = \overline{A}e_i(k) - B_1(\delta_i(k) + \omega_{ui}(k)) - L\omega_i(k+1) - L\delta_i'(k+1)$$

$$r_i(k+1) = CAe_i(k) + \omega_i(k+1) + \delta_i'(k+1). \qquad (7)$$

It can be learned from Formula (7) that $r_i(k)$ is directly affected by an abnormal signal $\delta_i'(k)$ of the intra-vehicle network or the sensor, and is indirectly affected by an abnormal signal $\delta_i(k-1)$ of the V2V network communication network. If there is no exception on the intra-vehicle network, the vehicle-mounted sensor, and the V2V network, that is, the values of $\delta_i(k-1)$ and $\delta_i'(k)$ are 0,

$$r_i(k+1) = CAe_i(k) + \omega_i(k+1). \qquad (8)$$

In addition, $e_i(k)$, $\omega_i(k+1)$, and $r_i(k+1)$ are all close to 0.

It may be learned from the Formula (2) and Formula (6) that $r_i(k)=[r_{i1}(k)r_{i2}(k)r_{i3}(k)r_{i4}(k)r_{i5}(k)]^T$, where $r_{i1}(k)$ to $r_{i5}(k)$ respectively correspond to noise of the signals $\xi_i$, $v_i$, $a_i$, $u_i$, $\Delta v_i$. When any one of $r_{i1}(k)$ to $r_{i5}(k)$ exceeds a corresponding noise threshold, it indicates that the corresponding signal is abnormal, and further, exception positioning may be performed.

For example, noise thresholds of each item in $r_i$ are a noise upper and lower bound of a corresponding signal, that is, noise thresholds of $r_{ij}$ are equal to an upper and lower bound of $\omega_{ij}$, where $r_{ij}$ and $\omega_{ij}$ are respectively a jth item of $r_i$ and a jth item of $\omega_i$.

In some possible implementations, $\omega_{ij}$ meets $|\omega_{ij}(k)| \leq \tau_j$, and $j \in \{1,2,3,4,5\}$. In this case, if $|r_{ij}(k)| > \tau_j$, it is considered that a corresponding signal of $r_{ij}$ is abnormal, and a location at which an exception occurs may be further determined based on the abnormal signal.

It may be understood that the tracking error $\xi_i$ needs to be determined based on speed sensor data and radar data, $v_i$ and $a_i$ may be respectively obtained through measurement by the speed sensor and the acceleration sensor of the vehicle, $u_i$ is determined through processing based on information obtained from another vehicle via the V2V communication network, the relative speed $\Delta v_i$ between the ith vehicle and the (i-1)th vehicle may be determined by the vehicle by processing the radar (for example, a lidar, a millimeter-wave radar, or an ultrasonic radar) data. Therefore, if $|r_{i1}(k)| > \tau_1$, it may be determined that the signal $\xi_i$ is abnormal, and if only this item is abnormal in $r_{ij}$, it may be determined that the exception occurs on the intra-vehicle network; if $|r_{i2}(k)| > \tau_2$, it may be determined that the signal $v_i$ is abnormal, and it is further determined that the exception occurs on the speed sensor; if $|r_{i3}(k)| > \tau_3$, it may be determined that the signal $a_i$ is abnormal, and it is further determined that the exception occurs on the acceleration sensor; if $|r_{i4}(k)| > \tau_4$, it may be determined that the signal $u_i$ is abnormal, and it is further determined that the exception occurs on the intra-vehicle network; and if $|r_{i5}(k)| > \tau_5$, it may be determined that the signal $\Delta v_i$ is abnormal, and if only this item is abnormal in $r_{ij}$, it may be determined that the exception occurs on the radar and/or the exception occurs on the intra-vehicle network. Because $r_{i1}$ is associated with a plurality of sensors, in some possible implementations, $\tau_1$ may be set to a conservative value, so that when the exception occurs on the radar and $r_{i5} > \tau_5$, $r_{i1} \leq \tau_1$; or when the exception occurs on the speed sensor and $r_{i2} > \tau_2$, $r_{i1} \leq \tau_1$.

It should be noted that, when the exception occurs on a specific sensor, the exception may cause an estimation error $e_i(k)$ to deviate from 0. Consequently, a residual signal corresponding to another sensor also starts to deviate from 0. Therefore, during exception positioning, a moment at which the residual signal becomes abnormal needs to be determined, and a location at which the exception occurs is determined based on a residual signal that is first abnormal.

Step 3: Design the monitor based on the residual signal, where the monitor may detect whether the exception occurs on the vehicle.

A quadratic form of the residual signal may be considered, and $z_i(k) = r_i^T(k)\Pi r_i(k)$ is defined, where $\Pi \in \mathbb{R}^{5 \times 5}$ is a positive semidefinite matrix (positive semidefinite matrix), and the monitor in the following form is considered.

If $z_i(k) = r_i^T(k)\Pi r_i(k) > 1$, the monitor outputs alarm information, to indicate that the exception occurs on the vehicle system, that is, a value of an alarm signal changes from 0 to 1.

Therefore, during Π design, it needs to be ensured that an ellipsoid $r_i^T(k)\Pi r_i(k) \leq 1$ includes all dynamic tracks that are of a residual system (7) and that may be caused by $\omega_{ui}(k)$ and $\omega_i(k)$. In addition, a volume of the ellipsoid Π needs to be minimized through adjustment, so that the detection method is more sensitive to an abnormal signal.

Further, whether the exception occurs on the vehicle may be determined based on the foregoing $z_i(k)$, and a specific location of the exception may be positioned based on the foregoing $r_i(k)$. For example, at the moment k, a relationship among $r_i$, $z_i$, and the location at which the exception occurs may be shown in Table 1.

Table 1 Relationship among $r_i$, $z_i$, and a location at which an exception occurs

| $z_i$ | $r_i$ | Exception positioning result |
|---|---|---|
| $\leq 1$ | - | No exception |
| $> 1$ | $r_{i1} \leq \tau_1$, $\tau_{i2} \leq \tau_2$, $r_{i3} \leq \tau_3$, $r_{i4} \leq \tau_4$, $r_{i5} \leq \tau_5$ | An exception occurs on a V2V communication network |
| $> 1$ | $r_{i1} > \tau_1$, $r_{i5} > \tau_5$, $r_{i2} \leq \tau_2$, $r_{i3} \leq \tau_3$, $\tau_{i4} \leq \tau_4$, | An exception occurs a radar |
| $> 1$ | $r_{i1} > \tau_1$, $\tau_{i2} \leq T_2$, $r_{i3} \leq \tau_3$, $r_{i4} \leq \tau_4$, $r_{i5} \leq \tau_5$ | An exception occurs on an intra-vehicle network |
| $> 1$ | $r_{i5} > \tau_5$, $r_{i1} \leq \tau_1$, $r_{i2} \leq \tau_2$, $r_{i3} \leq \tau_3$, $r_{i4} \leq \tau_4$ | An exception occurs on a radar/intra-vehicle network |
| $> 1$ | $r_{i2} > \tau_2$, $r_{i1} \leq \tau_1$, $r_{i3} \leq \tau3$, $r_{i4} \leq \tau_4$, $r_{i5} \leq \tau_5$ | An exception occurs on a speed sensor |
| $> 1$ | $r_{i3} > \tau_3$, $r_{i1} \leq \tau_1$, $r_{i2} \leq \tau_2$, $r_{i4} \leq \tau_4$, $r_{i5} \leq \tau_5$ | An exception occurs on an acceleration sensor |
| $> 1$ | $r_{i4} > \tau_4$ | An exception occurs on an intra-vehicle network |

As described above, when a threshold corresponding to each residual signal is set, because $r_{i1}$ is associated with the plurality of sensors, the corresponding threshold $\tau_1$ of $r_{i1}$ may be set conservatively.

In some possible implementations, $r_i$ may be a form of the first parameter in the method 400, $r_{ij}$ may be the first residual, and corresponding $\tau_j$ is the first preset threshold. Correspondingly, $z_i$ may be a form of the second parameter in the method 400. In some possible implementations, a residual, in $r_{ij}$, other than the first residual may be the second residual.

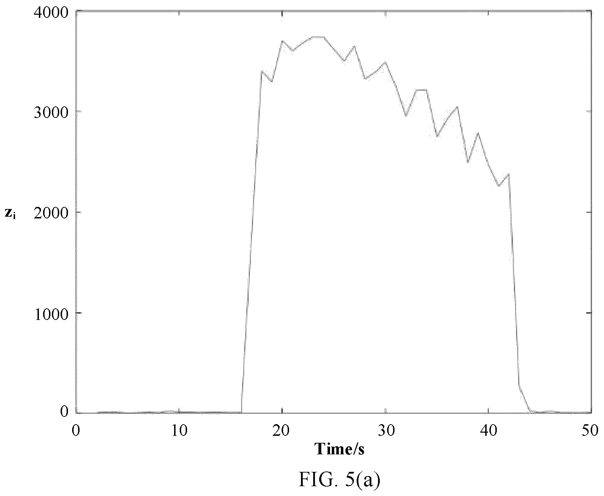

FIG. 5(a) to FIG. 7(c) show results of exception detection performed in the exception detection method provided in embodiments of this application.

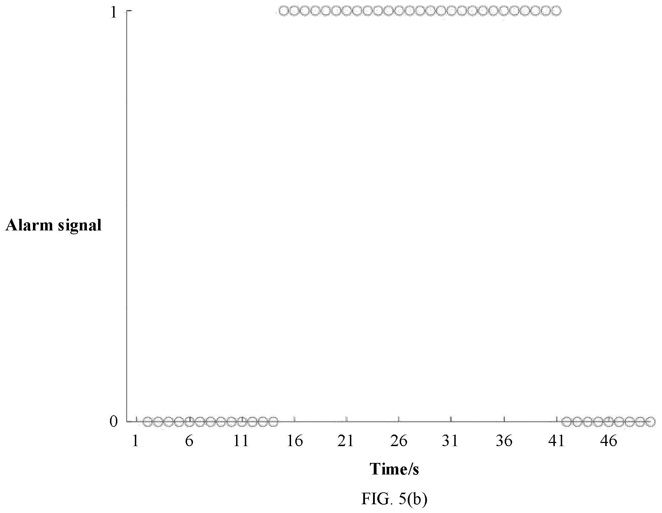

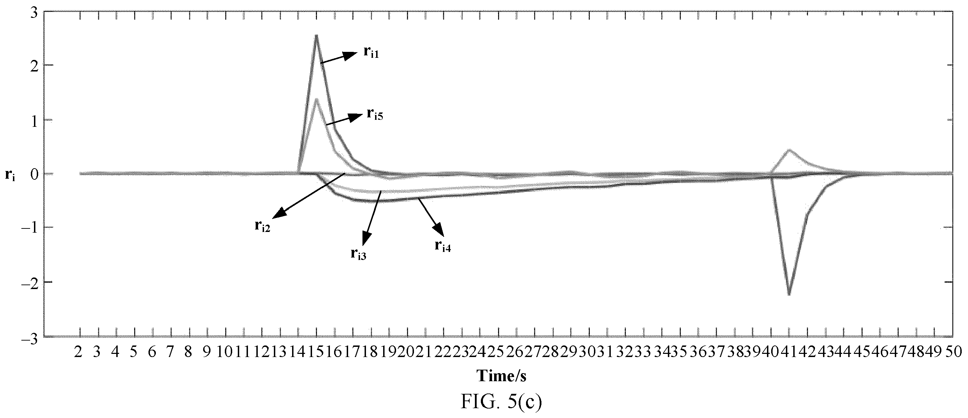

In an example, if an exception occurs on a millimeter-wave radar between a 15th second and a 40th second, in the exception detection method provided in embodiments of this application, as shown in FIG. 5(a), $z_i > 1$ may be detected from the 15th second to the 40th second, and in addition, it may be detected, from the 15th second to the 40th second, that a monitor outputs an alarm signal, as shown in FIG. 5(b). If the alarm signal is 0, it indicates that no alarm signal is output; or if the alarm signal is 1, it indicates that an alarm signal is output. In addition, due to the exception of the millimeter-wave radar, both a tracking error signal and a relative speed signal are abnormal, and further, $r_{i1}$ and $r_{i5}$ exceed a preset threshold, as shown in FIG. 5(c). In addition, it can be learned from FIG. 5(c) that $r_{i1}$ and $r_{i5}$ change abruptly at the 15th second. Due to the exception of the radar sensor, an estimation error $e_i(k)$ deviates from 0. Therefore, after the 15th second, due to impact of $e_i(k)$, $r_{i2}$ and $r_{i3}$ also deviate from 0. Therefore, it may be determined, based on a residual that first exceeds the preset threshold, that the exception occurs on the radar sensor.

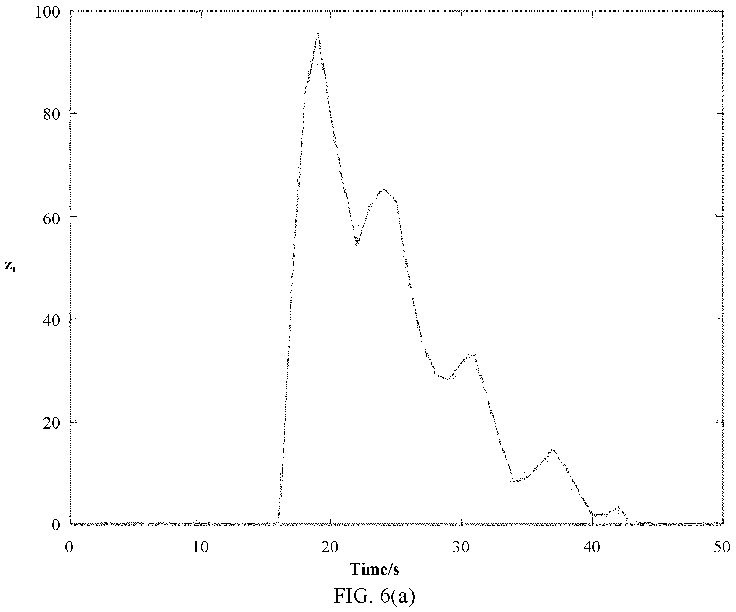

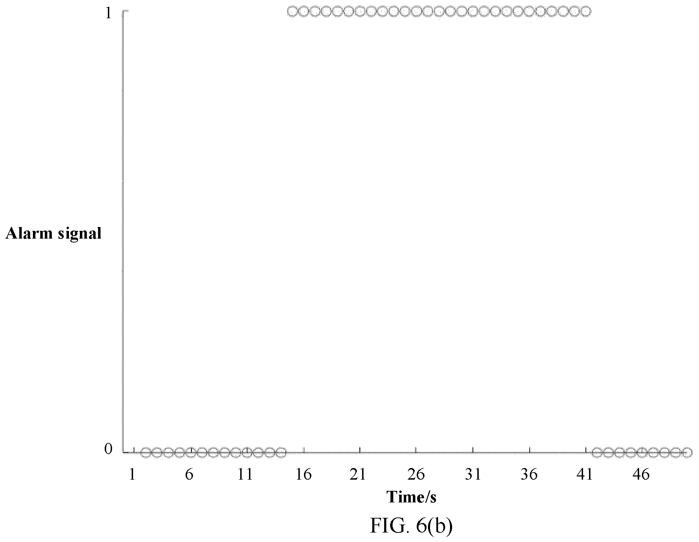

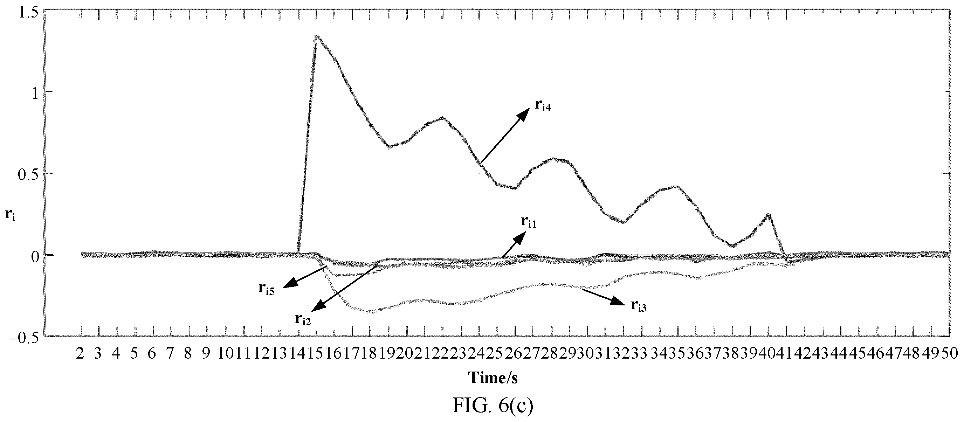

In another example, if an exception occurs on an intra-vehicle network between a 15th second and a 40th second, and the exception of the intra-vehicle network causes an expected acceleration to be injected with an abnormal signal, in the exception detection method provided in embodiments of this application, as shown in FIG. 6(a), $z_i > 1$ may be detected from the 15th second to the 40th second, and in addition, as shown in FIG. 6(b), it may be detected from the 15th second to the 40th second that a monitor outputs an alarm signal. In addition, an expected acceleration signal is abnormal due to the exception of the intra-vehicle network, and consequently, $r_{i4}$ exceeds a preset threshold, as shown in FIG. 6(c). In addition, it can be learned from FIG. 6(c) that $r_{i4}$ changes abruptly at the 15th second. Due to the exception of the intra-vehicle network, an estimation error $e_i(k)$ deviates from 0. Therefore, after the 15th second, due to impact of $e_i(k)$, $r_{i1}$, $Ti_2$, $ri_3$, and $r_{i5}$ also deviate from 0. Therefore, it may be determined, based on a residual that first exceeds the preset threshold, that the exception occurs on the intra-vehicle network.

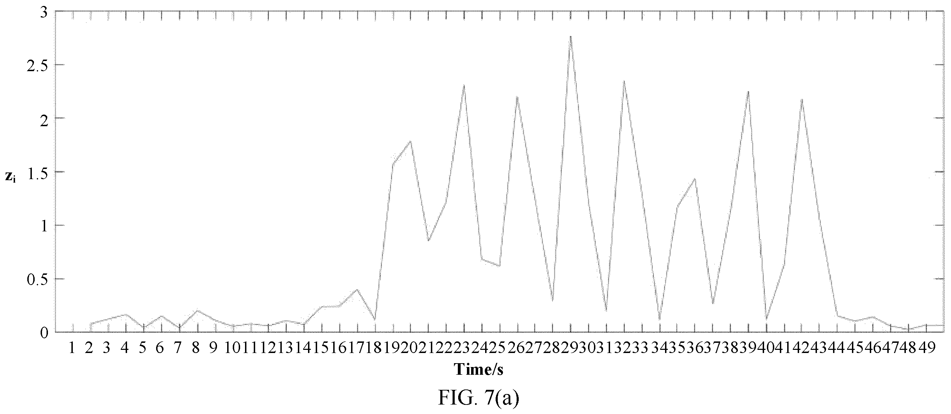

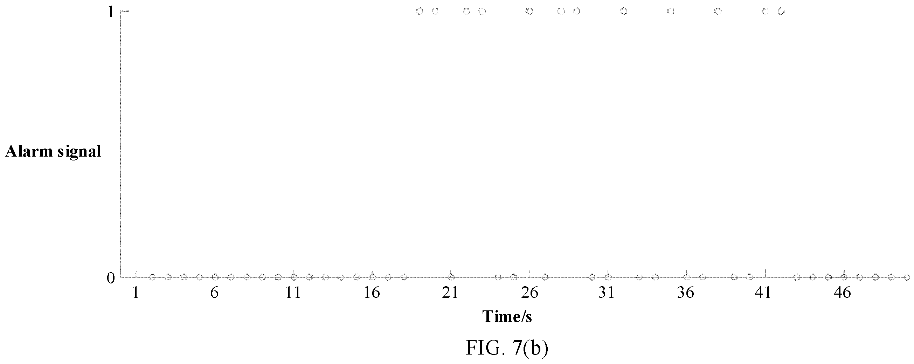

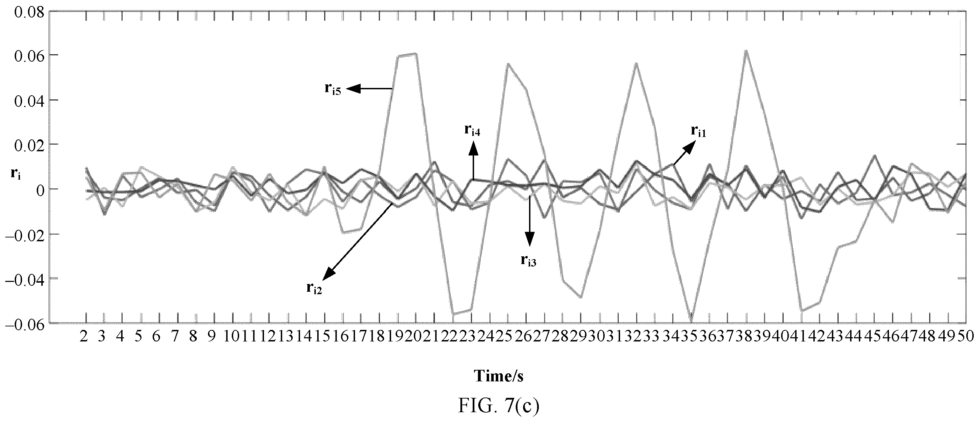

In still another example, if an exception occurs on a V2V communication network between a 15th second and a 40th second, in the exception detection method provided in embodiments of this application, as shown in FIG. 7(a), $z_i > 1$ may be detected from the 15th second to the 40th second, and in addition, it may be detected, from the 15th second to the 40th second, that a monitor outputs an alarm signal, as shown in FIG. 7(b). Because the exception of the V2V communication network does not directly affect $r_i$, as shown in FIG. 7(c), due to impact of the exception of the V2V communication network, $r_{i1}$ and $r_{i5}$ still fluctuate around 0, and each does not exceed a corresponding preset threshold. Therefore, it may be determined, based on a relationship among $r_i$, $z_i$, and the preset threshold, that the exception occurs on the V2V communication network.

In some possible implementations, a residual signal at a single moment is accidental. Therefore, a threshold $\tau_j$ at a single moment may be set more conservatively. Consequently, an exception detector based on a single moment may be more conservative and less sensitive to the exception signal. To improve accuracy of the detection method, $R_i(k) = [r_i(k - T + 1)^T r_i(k - T + 2)^T \cdots r_i(k)^T]^T$ is denoted, that is, a sum of T residual signals from a $T^{th}$ moment before a current moment to the current moment is calculated. Whether the exception occurs on the vehicle may be determined based on $R_i(k)$ and the preset threshold. When the exception occurs on the vehicle, $R_i(k)$ may be greater than the preset threshold. Further,

$$Z_i(k) = R_i^T(k)\,\overline{\Pi}R_i(k)$$ is defined, where $\overline{\Pi} \in \mathbb{R}^{5T \times 5T}$ is a positive semidefinite matrix, and when $Z_i(k) > 1$, it is determined that the exception occurs on the vehicle. For example, at the moment k, a relationship among $R_i$, $Z_i$, and the location at which the exception occurs may be shown in Table 2. Herein, $T_1$ to $T_5$ are respectively corresponding preset thresholds.

Table 2 Relationship among $R_i$, $Z_i$, and a location at which an exception occurs

| $z_i$ | $R_i$ | Exception positioning result |
|---|---|---|
| $\leq 1$ | - | No exception |
| $> 1$ | $R_{i1} \leq T_1, R_{i2} \leq T_2, R_{i3} \leq T_3, R_{i4} \leq T_4, R_{i5} \leq T_5$ | An exception occurs on a V2V communication network |
| $> 1$ | $R_{i1} > T_1, R_{i5} > T_5, R_{i2} \leq T_2, R_{i3} \leq T_3, R_{i4} \leq T_4,$ | An exception occurs a radar |
| $> 1$ | $R_{i1} > T_1, R_{i2} \leq T_2, R_{i3} \leq T_3, R_{i4} \leq T_4, R_{i5} \leq T_5$ | An exception occurs on an intra-vehicle network |
| $> 1$ | $R_{i5} > T_5, R_{i1} \leq T_1, R_{i2} \leq T_2, R_{i3} \leq T_3, R_{i4} \leq T_4$ | An exception occurs on a radar/intra-vehicle network |
| $> 1$ | $R_{i2} > T_2, R_{i1} \leq T_1, R_{i3} \leq T_3, R_{i4} \leq T_4, R_{i5} \leq T_5$ | An exception occurs on a speed sensor |
| $> 1$ | $R_{i3} > T_3, R_{i1} \leq T_1, R_{i2} \leq T_2, R_{i4} \leq T_4, R_{i5} \leq T_5$ | An exception occurs on an acceleration sensor |
| $> 1$ | $R_{i4} > T_4$ | An exception occurs on an intra-vehicle network |

In the foregoing embodiment, $R_i$ may be a form of the first parameter in the method *400*, $R_{ij}$ may be the first residual, and corresponding $T_j$ is the first preset threshold. 1 Correspondingly, $Z_i$ may be a form of the second parameter in the method 400. For example, a residual signal at the $T^{th}$ moment before the current moment may be a form of the third parameter in the method 400, and a residual signal at the current moment may be a form of the fourth parameter in the method 400. In some possible implementations, a residual, in $\begin{smallmatrix} R_{ij} \\ 1 \end{smallmatrix}$, other than the first residual may be the second residual.

In some possible implementations, exception detection on the vehicle may be further performed by using a Kalman filter. For example, it is assumed that both V2V network noise $\omega_{ui}(k)$ and sensor noise $\omega_i(k)$ are white Gaussian noise, $\omega_{ui}(k) \in \mathbb{N}(0, Q)$, and $\omega_i(k) \in \mathbb{N}(0, R)$, where $Q \in \mathbb{R}$ and $\mathbb{R}^{5 \times 5}$ are respectively covariance matrixes of $\omega_{ui}(k)$ and $\omega_i(k)$. In this case, the Kalman filter may be designed based on the vehicle system model shown in Formula (1) to Formula (3). The Kalman filter may perform the following two steps: prediction and update.

Prediction:

$$\hat{x}_i(k \mid k - 1) = \hat{x}_i(k - 1 \mid k - 1) + B_e(u_{i-1}(k - 1) + \delta_i(k - 1) + \omega_{ui}(k - 1))$$

Update:

$$\hat{x}_i(k \mid k) = \hat{x}_i(k \mid k - 1) + K(y_i(k) - C\hat{x}_i(k \mid k - 1))$$

For each moment, a residual signal $r_i(k) = y_i(k) - C\hat{x}_i(k|k - 1)$, $k = 1, 2, \cdots$ is defined, so that a sequence $\{r_i(k), k = 1, 2, \cdots\}$ is white Gaussian noise with a mean value of 0, and a covariance matrix is $\Sigma = CPC^T + R$. Exception detection may be implemented with reference to a hypothesis testing method (hypothesis testing method). For example, at least one of the following methods: sequential ratio testing (sequential ratio testing, SPRT), cumulative sum (cumulative sum, CUSUM), generalized likelihood ratio (generalized likelihood ratio, GLR), and compound scalar testing (composite scalar testing, CST) is used to checking a residual signal, so as to implement exception detection.

In some possible implementations, when there is no exception, $H_0$ is met ($\delta_i(k)$ and $\delta_i'(k)$ are equal to 0), and

$$H_0 := \{E(r_i(k)) = 0, E(r_i(k)^\mathsf{T} r_i(k)) = \Sigma\};$$

and

when an exception occurs, $H_1$ is met, and

$$H_1 := \{E(r_i(k)) \neq 0, E(r_i(k)^\mathsf{T} r_i(k)) \neq \Sigma\}.$$

It should be noted that the exception detection method provided in this application is applicable to a CACC driving scenario, and further applicable to a driving scenario like an ACC driving scenario, an NCA driving scenario, or an ICA driving scenario. In addition, the foregoing embodiments are described by using a vehicle-related example. It should be understood that a solution in which a person skilled in the art performs exception detection on an internet of things (internet of things, IOT) device like an uncrewed aerial vehicle, a smart home, or a smart grid based on a concept of this application should also fall within a protection scope of this application.

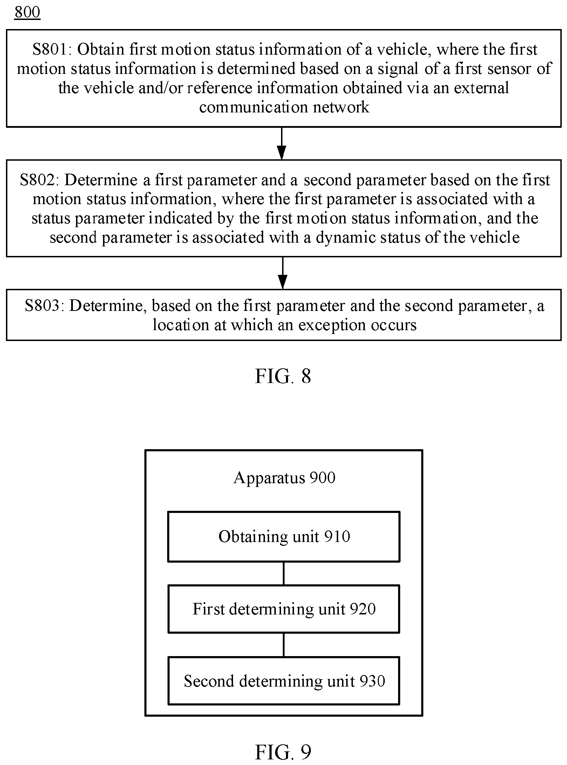

FIG. 8 is a schematic flowchart of an exception detection method 800 according to an embodiment of this application. For example, the method 800 may be applied to the vehicle 100 shown in FIG. 1, or may be performed by the system shown in FIG. 2, or may be performed by the exception detection module in the system shown in FIG. 3. The method 800 may include the following steps.

S801: Obtain first motion status information of a vehicle, where the first motion status information is determined based on a signal of a first sensor of the vehicle and/or reference information obtained via an external communication network.

For example, for a specific procedure of this step, refer to descriptions of S401 in the method 400. Details are not described herein again.

S802: Determine a first parameter and a second parameter based on the first motion status information, where the first parameter is associated with noise of a status parameter indicated by the first motion status information, and the second parameter is associated with a dynamic status of the vehicle.

For example, the first parameter may be the first parameter in the foregoing embodiments, for example, $r_i$ or $R_i$; and the second parameter may be the second parameter in the foregoing embodiments, for example, $z_i$ or $Z_i$.

S803: Determine, based on the first parameter and the second parameter, a location at which an exception occurs.

For example, for a specific method for determining, based on the first parameter and the second parameter, the location at which the exception occurs, refer to descriptions in the foregoing embodiments. Details are not described herein again.

In an exception detection method provided in embodiments of this application, a large amount of training data or statistical data is not needed, and a large amount of redundant information provided by another vehicle and/or a roadside infrastructure is not needed, whether the exception occurs on the vehicle and the location at which the exception occurs may be determined based on real-time motion status information, so that accuracy and timeliness of exception detection can be improved.

In various embodiments of this application, unless otherwise stated or there is a logic conflict, terms and/or descriptions in all embodiments are consistent and may be mutually referenced, and technical features in different embodiments may be combined based on an internal logical relationship thereof, to form a new embodiment.

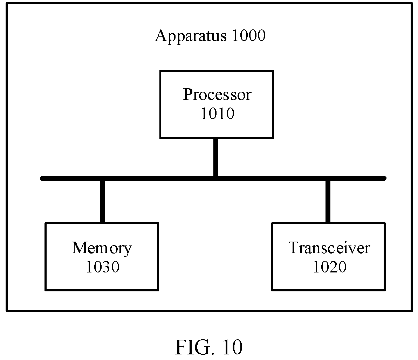

The foregoing describes in detail the method provided in embodiments of this application with reference to FIG. 2 to FIG. 8. The following describes in detail the apparatuses provided in embodiments of this application with reference to FIG. 9 and FIG. 10. It should be understood that descriptions of apparatus embodiments correspond to the descriptions of the method embodiments. Therefore, for content that is not described in detail, refer to the method embodiments. For brevity, details are not described herein again.

FIG. 9 is a block diagram of an exception detection apparatus 900 according to an embodiment of this application. The apparatus 900 includes an obtaining unit 910, a first determining unit 920, and a second determining unit 930.

The apparatus 900 may include units configured to perform the method in FIG. 4 or FIG. 8. In addition, the units in the apparatus 900 and the foregoing other operations and/or functions are respectively intended to implement corresponding procedures of the method embodiment in FIG. 4 or FIG. 8.

When the apparatus 900 is configured to perform the method 800 in FIG. 8, the obtaining unit 910 may be configured to perform S801 in the method 800, the first determining unit 920 may be configured to perform S802 in the method 800, and the second determining unit 930 may be configured to perform S803 in the method 800.

Specifically, the obtaining unit 910 is configured to obtain first motion status information of a vehicle, where the first motion status information is determined based on a signal of a first sensor of the vehicle and/or reference information obtained via an external communication network; the first determining unit 920 is configured to determine a first parameter and a second parameter based on the first motion status information, where the first parameter is associated with a status parameter indicated by the first motion status information, and the second parameter is associated with a dynamic status of the vehicle; and the second determining unit 930 is configured to determine, based on the first parameter and the second parameter, a location at which an exception occurs.

Optionally, the first determining unit 920 is configured to determine the first parameter based on the first motion status information and first prediction status information, where the first parameter includes a first residual, the first residual is associated with the first sensor, and the first prediction status information is determined based on second motion status information of the vehicle at a previous moment; and the second determining unit 930 is configured to: when a value of the first residual is greater than a first preset threshold, determine that the exception occurs on the first sensor and/or the exception occurs on an intra-vehicle network of the vehicle.

Optionally, the first parameter further includes a second residual, the second residual is associated with a second sensor of the vehicle, and when the first motion status information is associated with the external communication network, the first determining unit 920 is further configured to determine the second parameter based on the first parameter; and the second determining unit 930 is further configured to: when a value of each residual in the first parameter is less than or equal to a preset threshold corresponding to the residual, and the second parameter is greater than a second preset threshold, determine that the exception occurs on the external communication network.

Optionally, the first determining unit 920 is configured to: determine a third parameter based on the second motion status information and second prediction status information of the vehicle at the previous moment; determine a fourth parameter based on the first motion status information and the first prediction status information; and determine the first parameter based on the third parameter and the fourth parameter.

Optionally, the first sensor includes at least one of the following: a lidar, a millimeter-wave radar, an ultrasonic radar, a speed sensor, an acceleration sensor, a camera apparatus, and a global navigation satellite system GNSS.

Optionally, the status parameter indicated by the first motion status information includes at least one of the following of the vehicle at a current moment: a location, a speed, an acceleration, a relative speed to another vehicle, an expected acceleration, and a tracking error; and the expected acceleration is an expected acceleration of the vehicle that is determined based on the reference information and/or the signal of the first sensor.

Optionally, the apparatus further includes a transceiver unit, configured to send, to a controller of the vehicle, information indicating that the exception occurs on the first sensor and/or the exception occurs on the internal communication network, so that the controller controls an intelligent driving level to be lowered or an intelligent driving function to be disabled.

For example, the obtaining unit 910 may be disposed in the estimator shown in FIG. 2, the first determining unit 920 may also be disposed in the estimator shown in FIG. 2, and the second determining unit 930 may be disposed in the monitor shown in FIG. 2. Alternatively, the apparatus 900 may be disposed in the exception detection module shown in FIG. 3.

It should be understood that division into the units of the foregoing apparatus is merely logical function division. During actual implementation, all or some of the units may be integrated into one physical entity, or may be physically separated. In addition, the units in the apparatus may be implemented in a form of software called by a processor. For example, the apparatus includes a processor, the processor is connected to a memory, the memory stores instructions, and the processor calls the instructions stored in the memory, to implement any one of the foregoing methods or implement functions of the units in the apparatus. The processor is, for example, a general-purpose processor, for example, a CPU or a microprocessor, and the memory is a memory in the apparatus or a memory outside the apparatus. Alternatively, the units in the apparatus may be implemented in a form of hardware circuit, and functions of some or all of the units may be implemented by designing the hardware circuit. The hardware circuit may be understood as one or more processors. For example, in an implementation, the hardware circuit is an ASIC, and the functions of some or all of the units are implemented by designing a logical relationship between components in the circuit. For another example, in another implementation, the hardware circuit may be implemented by using a PLD. An FPGA is used as an example, the FPGA may include a large quantity of logic gate circuits, and a connection relationship between the logic gate circuits is configured by using a configuration file, to implement the functions of some or all of the units. All the units of the apparatus may be implemented in a form of software called by the processor, or may be implemented in a form of hardware circuit, or some of the units are implemented in a form of software called by the processor, and remaining units are implemented in a form of hardware circuit.

In this embodiment of this application, the processor is a circuit having a signal processing capability. In an implementation, the processor may be a circuit having an instruction reading and running capability, for example, a CPU, a microprocessor, a GPU, or a DSP. In another implementation, the processor may implement a specific function based on a logical relationship of a hardware circuit. The logical relationship of the hardware circuit is fixed or reconfigurable. For example, the processor is a hardware circuit implemented by using an ASIC or a PLD, for example, an FPGA. In a reconfigurable hardware circuit, a process in which the processor loads a configuration document to implement hardware circuit configuration may be understood as a process in which the processor loads instructions to implement functions of some or all of the units. In addition, the circuit may be a hardware circuit designed for artificial intelligence, and may be understood as an ASIC, for example, an NPU, a TPU, or a DPU.

It can be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the apparatus may be integrated, or may be implemented independently. In an implementation, the units may be integrated together and implemented in a form of system-on-a-chip (system-on-a-chip, SOC). The SOC may include at least one processor, configured to implement any one of the foregoing methods or implement functions of the units in the apparatus. Types of the at least one processor may be different, for example, including a CPU and an FPGA, a CPU and an artificial intelligence processor, or a CPU and a GPU.

In a specific implementation process, the operations performed by the obtaining unit 910, the first determining unit 920, and the second determining unit 930 may be performed by a same processor, or may be performed by different processors, for example, separately performed by a plurality of processors. In a specific implementation process, the one or more processors may be processors disposed on the computing platform 150 shown in FIG. 1, or may be processors disposed on a cloud server. In a specific implementation process, the apparatus 900 may be a chip disposed in the vehicle 100, or may be a chip disposed in a cloud server.

FIG. 10 is a block diagram of an exception detection apparatus according to an embodiment of this application. An exception detection apparatus 1000 shown in FIG. 10 may include a processor 1010, a transceiver 1020, and a memory 1030. The processor 1010, the transceiver 1020, and the memory 1030 are connected through an internal connection path. The memory 1030 is configured to store instructions. The processor 1010 is configured to execute the instructions stored in the memory 1030, so that the transceiver 1020 receives/sends some parameters. Optionally, the memory 1030 may be coupled to the processor 1010 through an interface, or may be integrated together with the processor 1010.

It should be noted that the transceiver 1020 may include but is not limited to a transceiver apparatus of an input/output interface (input/output interface), to implement communication between the apparatus 1000 and another device or a communication network.

The memory 1030 may be a read-only memory (read-only memory, ROM), a static storage device, a dynamic storage device, or a random access memory (random access memory, RAM).

The transceiver 1020 uses a transceiver apparatus, for example but not limited to, a transceiver, to implement communication between the apparatus 1000 and another device or a communication network.

In some possible implementations, the apparatus 1000 may be disposed in the computing platform 150 shown in FIG. 1, or may be disposed in the exception detection module shown in FIG. 3, or may be disposed in the cloud server.

An embodiment of this application further provides a server. The server may include the apparatus 900 or the apparatus 1000.

An embodiment of this application further provides a vehicle. The vehicle may include the apparatus 900 or the apparatus 1000.

An embodiment of this application further provides a computer program product. The computer program product includes computer program code. When the computer program code is run on a computer, the computer is enabled to implement the method in embodiments of this application.

An embodiment of this application further provides a computer-readable storage medium. The computer-readable medium stores computer instructions. When the computer instructions are run on a computer, the computer is enabled to implement the method in embodiments of this application.

An embodiment of this application further provides a chip, including a circuit configured to perform the method in embodiments of this application.

In an implementation process, the steps in the foregoing methods may be implemented by using a hardware integrated logical circuit in the processor, or by using instructions in a form of software. The method disclosed with reference to embodiments of this application may be directly performed by a hardware processor, or may be performed by a combination of a software module and hardware in the processor. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

A person of ordinary skill in the art may be aware that, with reference to examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist independently physically, or two or more units may be integrated into one unit.

When the functions are implemented in the form of software functional unit and sold or used as an independent product, the functions may be stored in a computer-readable storage medium. Based on such an understanding, the technical solutions of this application essentially or some of the technical solutions may be implemented in a form of software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An exception detection method, comprising:

   obtaining first motion status information of a vehicle, wherein the first motion status information is determined based on a signal of a first sensor of the vehicle and/or reference information obtained via an external communication network;
   determining a first parameter and a second parameter based on the first motion status information, wherein the first parameter is associated with a status parameter indicated by the first motion status information, and the second parameter is associated with a dynamic status of the vehicle; and
   determining, based on the first parameter and the second parameter, a location at which an exception occurs.

2. The method according to claim 1, wherein determining the first parameter and the second parameter based on the first motion status information comprises:

   determining the first parameter based on the first motion status information and first prediction status information, wherein the first parameter comprises a first residual, the first residual is associated with the first sensor, and the first prediction status information is determined based on second motion status information of the vehicle at a previous moment, wherein
   determining, based on the first parameter and the second parameter, the location at which the exception occurs comprises:
   when a value of the first residual is greater than a first preset threshold, determining that the exception occurs on the first sensor and/or the exception occurs on an intra-vehicle network of the vehicle.

3. The method according to claim 2, wherein the first parameter further comprises a second residual, the second residual is associated with a second sensor of the vehicle, and determining the first parameter and the second parameter based on the first motion status information comprises:
   determining the second parameter based on the first parameter; and
   when the first motion status information is associated with the external communication network, determining, based on the first parameter and the second parameter, the location at which the exception occurs comprises:

when a value of each residual in the first parameter is less than or equal to a preset threshold corresponding to the residual, and the second parameter is greater than a second preset threshold, determining that the exception occurs on the external communication network.

4. The method according to claim 2 or 3, wherein determining the first parameter based on the first motion status information and the first prediction status information comprises:

determining a third parameter based on the second motion status information and second prediction status information of the vehicle at the previous moment;
determining a fourth parameter based on the first motion status information and the first prediction status information; and
determining the first parameter based on the third parameter and the fourth parameter.

5. The method according to any one of claims 1 to 4, wherein the first sensor comprises at least one of the following: a lidar, a millimeter-wave radar, an ultrasonic radar, a speed sensor, an acceleration sensor, a camera apparatus, and a global navigation satellite system GNSS.

6. The method according to any one of claims 1 to 5, wherein the status parameter indicated by the first motion status information comprises at least one of the following of the vehicle at a current moment: a location, a speed, an acceleration, a relative speed to another vehicle, an expected acceleration, and a tracking error; and
the expected acceleration is an expected acceleration of the vehicle that is determined based on the reference information and/or the signal of the first sensor.

7. The method according to any one of claims 1 to 6, wherein the method further comprises:
sending, to a controller of the vehicle, information indicating that the exception occurs on the first sensor and/or the exception occurs on the internal communication network, so that the controller controls an intelligent driving level to be lowered or an intelligent driving function to be disabled.

8. An exception detection apparatus, comprising:

an obtaining unit, configured to obtain first motion status information of a vehicle, wherein the first motion status information is determined based on a signal of a first sensor of the vehicle and/or reference information obtained via an external communication network;
a first determining unit, configured to determine a first parameter and a second parameter based on the first motion status information, wherein the first parameter is associated with a status parameter indicated by the first motion status information, and the second parameter is associated with a dynamic status of the vehicle; and
a second determining unit, configured to determine, based on the first parameter and the second parameter, a location at which an exception occurs.

9. The apparatus according to claim 8, wherein the first determining unit is configured to:

determine the first parameter based on the first motion status information and first prediction status information, wherein the first parameter comprises a first residual, the first residual is associated with the first sensor, and the first prediction status information is determined based on second motion status information of the vehicle at a previous moment; and
the second determining unit is configured to: when a value of the first residual is greater than a first preset threshold, determine that the exception occurs on the first sensor and/or the exception occurs on an intra-vehicle network of the vehicle.

10. The apparatus according to claim 9, wherein the first parameter further comprises a second residual, the second residual is associated with a second sensor of the vehicle, and when the first motion status information is associated with the external communication network, the first determining unit is further configured to:

determine the second parameter based on the first parameter; and
the second determining unit is further configured to: when a value of each residual in the first parameter is less than or equal to a preset threshold corresponding to the residual, and the second parameter is greater than a second preset threshold, determine that the exception occurs on the external communication network.

11. The apparatus according to claim 9 or 10, wherein the first determining unit is configured to:

    determine a third parameter based on the second motion status information and second prediction status information of the vehicle at the previous moment;
    determine a fourth parameter based on the first motion status information and the first prediction status information; and
    determine the first parameter based on the third parameter and the fourth parameter.

12. The apparatus according to any one of claims 8 to 11, wherein the first sensor comprises at least one of the following: a lidar, a millimeter-wave radar, an ultrasonic radar, a speed sensor, an acceleration sensor, a camera apparatus, and a global navigation satellite system GNSS.

13. The apparatus according to any one of claims 8 to 12, wherein the status parameter indicated by the first motion status information comprises at least one of the following of the vehicle at a current moment: a location, a speed, an acceleration, a relative speed to another vehicle, an expected acceleration, and a tracking error; and
    the expected acceleration is an expected acceleration of the vehicle that is determined based on the reference information and/or the signal of the first sensor.

14. The apparatus according to any one of claims 8 to 13, wherein the apparatus further comprises a transceiver unit, configured to send, to a controller of the vehicle, information indicating that the exception occurs on the first sensor and/or the exception occurs on the internal communication network, so that the controller controls an intelligent driving level to be lowered or an intelligent driving function to be disabled.

15. An exception detection apparatus, comprising:

    a memory, configured to store a computer program; and
    a processor, configured to execute the computer program stored in the memory, to enable the apparatus to perform the method according to any one of claims 1 to 7.

16. A vehicle, comprising the apparatus according to any one of claims 8 to 15.

17. A server, comprising the apparatus according to any one of claims 8 to 15.

18. A computer-readable storage medium, wherein the computer-readable storage medium stores instructions, and when the instructions are executed by a processor, the processor is enabled to implement the method according to any one of claims 1 to 7.

19. A chip, wherein the chip comprises a circuit, and the circuit is configured to perform the method according to any one of claims 1 to 7.

20. A computer program product, wherein the computer program product comprises computer program code, and when the computer program code is run on a computer, the computer is enabled to perform the method according to any one of claims 1 to 7.

Vehicle 100

Sensing system 120

Communication system 160

Computing platform 150

| Processor 151 | Processor 152 | ... | Processor 15n |

FIG. 1

Abnormal V2V
communication signal

Abnormal sensor
signal

Estimator

Estimated
value

−

+

Residual

Monitor

Alarm
information

Measured value

FIG. 2

```
┌─────────────────────────┐
│     Sensing module      │
└─────────────────────────┘
            │
            ▼
┌─────────────────────────┐        ┌─────────────────────────┐
│   Exception detection   │───────▶│  Planning control module │
│        module           │        │                          │
└─────────────────────────┘        └─────────────────────────┘
            ▲                                   │
            │                                   ▼
┌─────────────────────────┐        ┌─────────────────────────┐
│  Communication module   │        │        Actuator          │
└─────────────────────────┘        └─────────────────────────┘
```

FIG. 3

400

┌──────────────────────────────────────────────────────────────────────────┐
│ S401: Obtain first motion status information of a vehicle, where the first  │
│ motion status information is determined based on a signal of a first sensor │
│ of the vehicle and/or reference information obtained via an external        │
│ communication network                                                      │
└──────────────────────────────────────────────────────────────────────────┘
                                    │
                                    ▼
┌──────────────────────────────────────────────────────────────────────────┐
│ S402: Determine a first parameter based on the first motion status         │
│ information and first prediction status information, where the first        │
│ parameter includes a first residual, the first residual is associated with  │
│ the first sensor, and the first prediction status information is determined  │
│ based on second motion status information of the vehicle at a previous       │
│ moment                                                                     │
└──────────────────────────────────────────────────────────────────────────┘
                                    │
                                    ▼
┌──────────────────────────────────────────────────────────────────────────┐
│ S403: When a value of the first residual is greater than a first preset     │
│ threshold, determine that an exception occurs on the first sensor and/or an  │
│ exception occurs on an intra-vehicle network of the vehicle                 │
└──────────────────────────────────────────────────────────────────────────┘

FIG. 4

FIG. 5(a)

FIG. 5(b)

FIG. 5(c)

FIG. 6(a)

FIG. 6(b)

FIG. 6(c)

EP 4 629 212 A1

FIG. 7(a)

FIG. 7(b)

FIG. 7(c)

800

S801: Obtain first motion status information of a vehicle, where the first motion status information is determined based on a signal of a first sensor of the vehicle and/or reference information obtained via an external communication network

S802: Determine a first parameter and a second parameter based on the first motion status information, where the first parameter is associated with a status parameter indicated by the first motion status information, and the second parameter is associated with a dynamic status of the vehicle

S803: Determine, based on the first parameter and the second parameter, a location at which an exception occurs

FIG. 8

Apparatus 900

Obtaining unit 910

First determining unit 920

Second determining unit 930

FIG. 9

Apparatus 1000

Processor
1010

Memory
1030

Transceiver
1020

FIG. 10

## INTERNATIONAL SEARCH REPORT

| International application No. |
|---|
| **PCT/CN2022/137262** |

**A. CLASSIFICATION OF SUBJECT MATTER**

G08G1/01(2006.01)i

According to International Patent Classification (IPC) or to both national classification and IPC

**B. FIELDS SEARCHED**

Minimum documentation searched (classification system followed by classification symbols)

IPC: G08, B60, H04, G01

Documentation searched other than minimum documentation to the extent that such documents are included in the fields searched

Electronic data base consulted during the international search (name of data base and, where practicable, search terms used)

CNABS, VEN, ENTXT, CNTXT, CNKI, IEEE, 万方, WANFANG, 读秀, DUXIU: 车, 传感器, 内网, 外部, 网络, 通信, 异常, 故障, 攻击, 残差, 误差, 阈值, 速度, 加速度, vehicle, sensor, network, external, V2V, V2I, V2X, anomaly, exception, abnormal, fault, intrusion, difference, error, thresholds, speed, acceleration

**C. DOCUMENTS CONSIDERED TO BE RELEVANT**

| Category* | Citation of document, with indication, where appropriate, of the relevant passages | Relevant to claim No. |
|---|---|---|
| Y | CN 114577252 A (GM GLOBAL TECHNOLOGY OPERATIONS LLC.) 03 June 2022 (2022-06-03) <br> description, paragraphs 29-70 | 1-20 |
| Y | US 2019308589 A1 (CISCO TECHNOLOGY, INC.) 10 October 2019 (2019-10-10) <br> description, paragraphs 13-137 | 1-20 |
| A | CN 114629698 A (NANJING UNIVERSITY OF AERONAUTICS AND ASTRONAUTICS) 14 June 2022 (2022-06-14) <br> entire document | 1-20 |
| A | CN 112622862 A (ADVANCED TECHNOLOGY RESEARCH INSTITUTE, BEIJING INSTITUTE OF TECHNOLOGY) 09 April 2021 (2021-04-09) <br> entire document | 1-20 |
| A | CN 112622931 A (BEIJING BAIDU NETCOM SCIENCE AND TECHNOLOGY CO., LTD.) 09 April 2021 (2021-04-09) <br> entire document | 1-20 |

☑ Further documents are listed in the continuation of Box C.    ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **05 September 2023** | **06 September 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2022/137262**

**C.     DOCUMENTS CONSIDERED TO BE RELEVANT**

| Category* | Citation of document, with indication, where appropriate, of the relevant passages | Relevant to claim No. |
|---|---|---|
| A | US 11405786 B1 (QUALCOMM INC.) 02 August 2022 (2022-08-02) entire document | 1-20 |
| A | US 2020137580 A1 (INTEL CORP.) 30 April 2020 (2020-04-30) entire document | 1-20 |
| A | WO 2019170863 A1 (VALEO COMFORT & DRIVING ASSISTANCE) 12 September 2019 (2019-09-12) entire document | 1-20 |

Form PCT/ISA/210 (second sheet) (July 2022)

**INTERNATIONAL SEARCH REPORT**
**Information on patent family members**

International application No.

**PCT/CN2022/137262**

| Patent document cited in search report | | | Publication date (day/month/year) | Patent family member(s) | | | Publication date (day/month/year) |
|---|---|---|---|---|---|---|---|
| CN | 114577252 | A | 03 June 2022 | DE | 102021111557 | A1 | 02 June 2022 |
| | | | | US | 2022172010 | A1 | 02 June 2022 |
| | | | | US | 11625031 | B2 | 11 April 2023 |
| US | 2019308589 | A1 | 10 October 2019 | US | 11110895 | B2 | 07 September 2021 |
| CN | 114629698 | A | 14 June 2022 | | None | | |
| CN | 112622862 | A | 09 April 2021 | | None | | |
| CN | 112622931 | A | 09 April 2021 | | None | | |
| US | 11405786 | B1 | 02 August 2022 | WO | 2022203758 | A1 | 29 September 2022 |
| | | | | US | 2022338012 | A1 | 20 October 2022 |
| | | | | US | 11589236 | B2 | 21 February 2023 |
| US | 2020137580 | A1 | 30 April 2020 | DE | 102020102426 | A1 | 03 September 2020 |
| | | | | US | 11553346 | B2 | 10 January 2023 |
| WO | 2019170863 | A1 | 12 September 2019 | FR | 3078668 | A1 | 13 September 2019 |
| | | | | FR | 3078668 | B1 | 14 January 2022 |

Form PCT/ISA/210 (patent family annex) (July 2022)